# EUROPEAN PATENT APPLICATION

(11) **EP 3 955 684 A1**
(43) Date of publication of application: **16.02.2022**
(21) Application number: 20798088.9
(22) Date of filing: 29.04.2020
(51) Int. Cl.: H04W 74/00, H04W 74/08

(54) **RANDOM ACCESS METHOD AND APPARATUS**

(30) Priority: 29.04.2019 CN 201910357356
(71) Applicant: Huawei Technologies Co., Ltd., Shenzhen, Guangdong 518129 (CN)
(72) Inventor: YOU, Chunhua, Shenzhen, Guangdong 518129 (CN); HUANG, Qufang, Shenzhen, Guangdong 518129 (CN); GUO, Yinghao, Shenzhen, Guangdong 518129 (CN); LOU, Chong, Shenzhen, Guangdong 518129 (CN)
(74) Representative: Grünecker Patent- und Rechtsanwälte PartG mbB
(86) International application number: PCT/CN2020/087840
(87) International publication number: WO 2020/221306

(57) **Abstract**

A random access method and apparatus are provided. After a random access process currently performed by a terminal fails, the terminal selects a random access resource to initiate a new random access process. In this application, a terminal may obtain first-type random access resources and second-type random access resources, where the first-type random access resources are used for first-type random access, and the second-type random access resources are used for second-type random access; the terminal sends a first message to a network device by using a resource in the first-type random access resources, to initiate the first-type random access; the terminal receives a backoff indicator from the network device, where the backoff indicator is used to indicate a time value, and the time value is used to determine a backoff time range; and when the first-type random access fails, the terminal performs random-access-resource selection in target-type random access resources within backoff duration selected from the backoff time range, where the target-type random access resources include the first-type random access resources or the second-type random access resources.

## Description

### CROSS-REFERENCE TO RELATED APPLICATIONS

This application claims priority to Chinese Patent Application No. 201910357356.3, filed with the China National Intellectual Property Administration on April 29, 2019 and entitled "RANDOM ACCESS METHOD AND APPARATUS", which is incorporated herein by reference in its entirety.

### TECHNICAL FIELD

This application relates to the field of mobile communication technologies, and in particular, to a random access method and apparatus.

### BACKGROUND

Currently, for a 3rd generation partnership project (3rd generation partnership project, 3GPP) network, two types of contention-based random access (random access, RA) processes are proposed.

A first random access process includes the following four steps. Step 1: A terminal sends a preamble (preamble) to a network device. Step 2: The network device feeds back a random access response (random access response, RAR) based on the received preamble. Step 3: The terminal sends uplink data based on the random access response. Step 4: The network device feeds back a contention resolution message to the terminal based on the uplink data. In the industry, this random access process is referred to as a four-step random access (random access channel, RACH) process, a 4-step RACH, or 4-step random access.

A second random access process includes the following two steps. Step A: A terminal sends a message A (MSGA) to a network device, where the MSGA may include a preamble and uplink data. Step B: After receiving the MSGA, the network device sends a message B (MSGB) to the terminal, where the MSGB may include a random access response and a contention resolution message. In the industry, this random access process is referred to as a two-step random access process, a 2-step RACH, or 2-step random access.

A terminal that supports both the foregoing two random access processes may initiate either the first random access process or the second random access process. For a scenario in which the two types of random access processes coexist, if a random access process currently performed by a terminal fails, there is no corresponding solution to how the terminal performs processing.

### SUMMARY

Embodiments of this application provide a random access method and apparatus, so that in a scenario in which two types of random access processes coexist, after a random access process currently performed by a terminal fails, the terminal selects a random access resource to initiate a new random access process.

According to a first aspect, an embodiment of this application provides a random access method. The method may be applied to a terminal, or may be applied to a chip inside a terminal. In the method, the terminal obtains first-type random access resources and second-type random access resources; sends a first message to a network device by using a resource in the first-type random access resources; receives a backoff indicator from the network device; and performs random-access-resource selection in target-type random access resources within backoff duration when the first-type random access fails.

According to a second aspect, an embodiment of this application provides a random access method. The method may be applied to a network device, or may be applied to a chip inside a network device. In the method, the network device receives a first message sent by a terminal by using a resource in first-type random access resources; and sends a backoff indicator to the terminal.

According to a third aspect, this application provides a random access apparatus, including a unit or means (means) configured to perform the steps in the first aspect or the second aspect.

According to a fourth aspect, this application provides a random access apparatus, including at least one processor and a memory, where the at least one processor is configured to perform the method provided in the first aspect or the second aspect.

According to a fifth aspect, this application provides a random access apparatus, including at least one processor and an interface circuit, where the at least one processor is configured to perform the method provided in the first aspect or the second aspect.

According to a sixth aspect, this application provides a program. When executed by a processor, the program is used to perform the method in the first aspect or the second aspect.

According to a seventh aspect, a program product, for example, a computer-readable storage medium, is provided, where the program product includes the program in the sixth aspect.

In the foregoing aspects, the first-type random access resources are used for the first-type random access, and the second-type random access resources are used for second-type random access. The first message is used to initiate the first-type random access. The backoff indicator is used to indicate a time value, and the time value is used to determine a backoff time range. The backoff duration is duration selected from the backoff time range. The target-type random access resources include the first-type random access resources or the second-type random access resources.

It can be learned that, in the foregoing aspects, for a scenario in which two types of random access processes coexist, if a random access process currently performed by the terminal fails, the terminal can select a random access resource within the backoff duration, and does not need to wait until the backoff duration ends to perform random-access-resource selection, thereby reducing a latency of the random-access-resource selection. Further, a latency of re-initiating a random access process by the terminal can be reduced, thereby improving user experience.

In a possible design, the terminal receives a first indication from the network device, where the first indication is used to indicate a random-access-resource type associated with the backoff indicator; or the terminal determines, based on a random-access-resource type corresponding to the first message, a random-access-resource type associated with the backoff indicator. In this way, the terminal can more accurately determine the random-access-resource type associated with the backoff indicator, and further more properly perform random-access-resource selection.

In a possible design, when the random-access-resource type associated with the backoff indicator is a random-access-resource type associated with the first-type random access resources, the target-type random access resources are the second-type random access resources; or when the random-access-resource type associated with the backoff indicator is a random-access-resource type associated with the second-type random access resources, the target-type random access resources are the first-type random access resources.

In a possible design, the terminal performs, after the backoff duration, random-access-resource selection in random access resources of the random-access-resource type associated with the backoff indicator. In this way, if the terminal does not select a random access resource within the backoff duration, the terminal may further select a random access resource after the backoff duration, to re-initiate random access.

In a possible design, the target-type random access resources are the second-type random access resources.

In a possible design, when a first condition is satisfied within the backoff duration, the terminal performs random-access-resource selection in the target-type random access resources within the backoff duration. In this way, the terminal performs random-access-resource selection within the backoff duration only when the first condition is satisfied, so that resource selection can be more effectively performed.

In a possible design, when a first condition is not satisfied within the backoff duration, the terminal performs random-access-resource selection in the first-type random access resources or the second-type random access resources after the backoff duration.

In a possible design, the terminal initiates random access by using a selected random access resource.

In a possible design, when the terminal does not receive, within first preset duration, a response message sent by the network device for the first message, the terminal determines that the first-type random access fails; or when the terminal does not receive, within second preset duration, a contention resolution message sent by the network device for the first message, the terminal determines that the first-type random access fails.

In a possible design, the first condition may include but is not limited to: a reference signal received power RSRP included in a synchronization signal block SSB corresponding to the target-type random access resources is greater than a first preset threshold; reference signal received quality RSRQ included in an SSB corresponding to the target-type random access resources is greater than a second preset threshold; quality of a physical downlink control channel PDCCH included in an SSB corresponding to the target-type random access resources is greater than a third preset threshold; a first timer expires, where the first timer is a timer started for the target-type random access resources when the first-type random access is initiated or a timer started for the target-type random access resources after the first message is sent; or the target-type random access resources arrive earlier. In this way, the terminal initiates random access by using the random access resource selected in this design, so that a random access success rate is greater.

In a possible design, the first-type random access is a four-step random access process, and the second-type random access is a two-step random access process; or the first-type random access is a two-step random access process, and the second-type random access is a four-step random access process.

In a possible design, the first message includes a random access signal; or the first message includes a random access signal and information used for contention resolution.

According to an eighth aspect, an embodiment of this application provides another random access method. The method may be applied to a terminal, or may be applied to a chip inside a terminal. In the method, the terminal obtains first-type random access resources and second-type random access resources; sends a first message to a network device by using a resource in the first-type random access resources; receives a first backoff indicator and a second backoff indicator from the network device; and performs random-access-resource selection in the first-type random access resources after first backoff duration when first-type random access fails, or performs random-access-resource selection in the second-type random access resources after second backoff duration.

According to a ninth aspect, an embodiment of this application provides another random access method. The method may be applied to a network device, or may be applied to a chip inside a network device. In the method, the network device receives a first message sent by a terminal by using a resource in first-type random access resources; and sends a first backoff indicator and a second backoff indicator to the terminal.

According to a tenth aspect, this application provides a random access apparatus, including a unit or means (means) configured to perform the steps in the eighth aspect or the ninth aspect.

According to an eleventh aspect, this application provides a random access apparatus, including at least one processor and a memory, where the at least one processor is configured to perform the method provided in the eighth aspect or the ninth aspect.

According to a twelfth aspect, this application provides a random access apparatus, including at least one processor and an interface circuit, where the at least one processor is configured to perform the method provided in the eighth aspect or the ninth aspect.

According to a thirteenth aspect, this application provides a program. When executed by a processor, the program is used to perform the method in the eighth aspect or the ninth aspect.

According to a fourteenth aspect, a program product, for example, a computer-readable storage medium, is provided, where the program product includes the program in the thirteenth aspect.

In the foregoing aspects, the first-type random access resources are used for the first-type random access, and the second-type random access resources are used for second-type random access. The first message is used to initiate the first-type random access. The first backoff indicator is associated with the first-type random access, and the second backoff indicator is associated with the second-type random access. The first backoff indicator is used to indicate a first time value, and the first time value is used to determine a first backoff time range. The second backoff indicator is used to indicate a second time value, and the second time value is used to determine a second backoff time range. The first backoff duration is duration selected from the first backoff time range, and the second backoff duration is duration selected from the second backoff time range.

It can be learned that, in the foregoing aspects, for a scenario in which two types of random access processes coexist, if a random access process currently performed by the terminal fails, the terminal can separately perform backoff based on the backoff indicators corresponding to the two types of random access.

In a possible design, when the first-type random access fails, if a random-access-resource selection condition is satisfied within the first backoff duration, the terminal selects, within the first backoff duration, a random access resource to initiate random access, and does not perform backoff based on the second backoff duration. Alternatively, when the first-type random access fails, if a random-access-resource selection condition is satisfied within the second backoff duration, the terminal selects, within the second backoff duration, a random access resource to initiate random access, and does not perform backoff based on the first backoff duration.

In a possible design, when the first-type random access fails, if the random-access-resource selection condition is not satisfied within both the first backoff duration and the second backoff duration, the terminal may select a random access resource from the first-type random access resources or the second-type random access resources, to initiate random access.

In a possible design, the terminal may select, from random access resources whose priority is higher in the first-type random access resources and the second-type random access resources, a resource used to initiate random access. A priority of the first-type random access resources and a priority of the second-type random access resources may be preset, or may be configured by the network device. Alternatively, a type of random access resources whose priority is higher or lower may be indicated by the network device.

In a possible design, the first backoff indicator and the second backoff indicator may be located in a same MAC PDU. Certainly, the first backoff indicator and the second backoff indicator may alternatively be located in different MAC PDUs. This is not limited.

In a possible design, the MAC PDU further includes first indication information and second indication information. The first indication information is used to indicate a random access manner or random-access-resource type corresponding to the first backoff indicator, and the second indication information is used to indicate a random access manner or random-access-resource type corresponding to the second backoff indicator.

In a possible design, the first backoff indicator and the second backoff indicator are located in different subPDUs (subPDUs) of a MAC PDU. Based on this design, the terminal may determine, based on a sequence of arrival time points of the subPDUs in which the first backoff indicator and the second backoff indicator are separately located, the random access manner or random-access-resource type corresponding to the first backoff indicator and the random access manner or random-access-resource type corresponding to the second backoff indicator.

### BRIEF DESCRIPTION OF DRAWINGS

FIG. 1 is a schematic diagram of a communication system to which embodiments of this application may be applied;
FIG. 2 is a schematic diagram of another communication system to which embodiments of this application may be applied;
FIG. 3 is a schematic diagram of still another communication system to which embodiments of this application may be applied;
FIG. 4 is a schematic diagram of a four-step random access process according to an embodiment of this application;
FIG. 5 is a schematic diagram of a two-step random access process according to an embodiment of this application;
FIG. 6 is an implementation flowchart of a random access method according to an embodiment of this application;
FIG. 7 is an implementation flowchart of another random access method according to an embodiment of this application;
FIG. 8 is an implementation flowchart of still another random access method according to an embodiment of this application;
FIG. 9 is a schematic diagram of a switch between random access processes according to an embodiment of this application;
FIG. 10 is an implementation flowchart of still another random access method according to an embodiment of this application;
FIG. 11 is an implementation flowchart of still another random access method according to an embodiment of this application;
FIG. 12 is a schematic diagram of a MAC PDU according to an embodiment of this application;
FIG. 13 is a schematic diagram of a structure of a random access apparatus according to an embodiment of this application;
FIG. 14 is a schematic diagram of a structure of another random access apparatus according to an embodiment of this application;
FIG. 15 is a schematic diagram of a structure of a terminal according to an embodiment of this application; and
FIG. 16 is a schematic diagram of a structure of a network device according to an embodiment of this application.

### DESCRIPTION OF EMBODIMENTS

Some terms in this application are first described, to help a person skilled in the art have a better understanding.
(1) A terminal is also referred to as user equipment (user equipment, UE), a mobile station (mobile station, MS), a mobile terminal (mobile terminal, MT), or the like, and is a device that provides voice/data connectivity for a user, for example, a handheld device or a vehicle-mounted device with a wireless connection function. Currently, some examples of the terminal are a mobile phone (mobile phone), a tablet computer, a laptop computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).
(2) A network device is a device in a wireless network. For example, the network device may be a radio access network (radio access network, RAN) node (or device) that enables a terminal to access the wireless network, and may also be referred to as a base station. Currently, some examples of the RAN node are a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or a wireless fidelity (wireless fidelity, Wi-Fi) access point (access point, AP). In addition, in a network structure, the network device may include a centralized unit (centralized unit, CU) node, a distributed unit (distributed unit, DU) node, or a RAN device including a CU node and a DU node. The RAN device including a CU node and a DU node splits protocol layers of an eNB in a long term evolution (long term evolution, LTE) system. Functions of some protocol layers are centrally controlled by the CU, functions of some or all of remaining protocol layers are distributed in the DU, and the CU centrally controls the DU. For another example, the network device may be a core network (core network, CN) device that provides service support for a terminal. Common core network devices include an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of the terminal. The SMF entity may be responsible for session management, for example, establishment of a user session. The UPF entity may be a functional entity on a user plane, and is mainly responsible for a connection to an external network.

According to methods performed by the network device in embodiments of this application, the network device may be a RAN device or a CN device.

(3) "A plurality of' means two or more, and another quantifier is similar to this. And/or describes an association relationship for describing associated objects and represents that three relationships may exist. For example, A and/or B may represent the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Further, "at least one (at least one of)..." means one or any combination of subsequent associated objects. For example, "at least one of A, B, and C" includes A, B, C AB AC BC or ABC.

It should be noted that, in descriptions of this application, words such as "first" and "second" are merely used for distinction and description, and shall not be understood as an indication or implication of relative importance or an indication or implication of an order.

The following further describes the technical solutions of this application in detail with reference to the accompanying drawings of this specification.

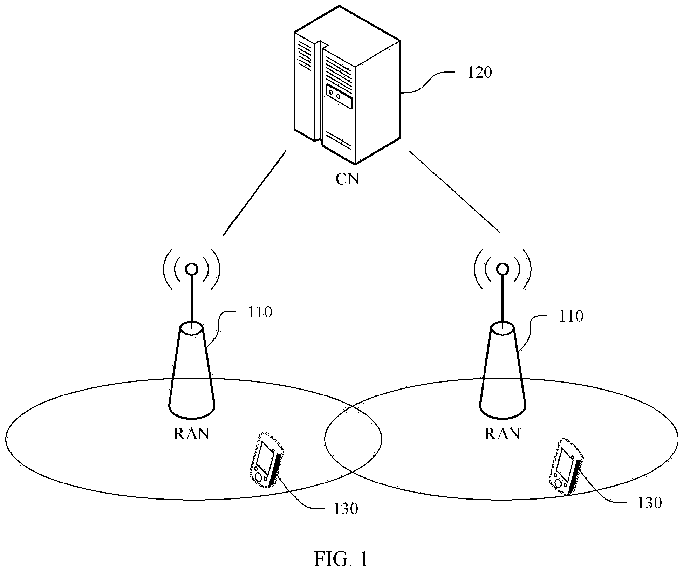

FIG. 1 is a schematic diagram of a communication system to which the embodiments of this application may be applied. As shown in FIG. 1, a terminal 130 may access a wireless network, to obtain a service from an external network (for example, the Internet) through the wireless network, or communicate with another device through the wireless network, for example, may communicate with another terminal. The wireless network includes a RAN 110 and a CN 120. The RAN 110 is used to connect the terminal 130 to the wireless network, and the CN 120 is used to manage the terminal and provide a gateway for communicating with the external network. It should be understood that a quantity of devices in the communication system shown in FIG. 1 is merely used as an example. This embodiment of this application is not limited thereto. In actual application, the communication system may further include more terminals 130 and more RANs 110, and may further include another device.

A type of the communication system shown in FIG. 1 is not limited in this application. For example, the communication system may be an LTE system, a new radio (new radio, NR) system, or a system in the middle of an LTE system and an NR system. The system in the middle may also be referred to as a 4.5G system, and certainly may also be a future communication system.

The CN 120 may include a plurality of CN devices. When the communication system shown in FIG. 1 is the NR system, the CN 120 may include an AMF entity, a UPF entity, an SMF entity, or the like. When the communication system shown in FIG. 1 is the LTE system, the CN 120 may include a mobility management entity (mobility management entity, MME), a serving gateway (serving gateway, S-GW), or the like.

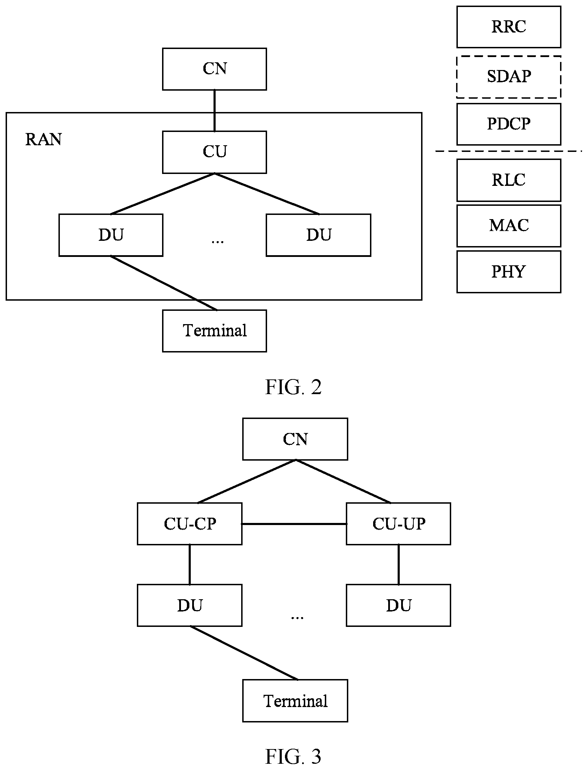

FIG. 2 is a schematic diagram of another communication system to which embodiments of this application may be applied. As shown in FIG. 2, the network architecture includes a CN device and a RAN device. The RAN device includes a baseband apparatus and a radio frequency apparatus. The baseband apparatus may be implemented by one node, or may be implemented by a plurality of nodes. The radio frequency apparatus may be independently implemented remotely from the baseband apparatus, or may be integrated into the baseband apparatus, or a part of the radio frequency apparatus is implemented remotely from the baseband apparatus and a remaining part is integrated into the baseband apparatus. For example, in an LTE communication system, a RAN device (eNB) includes a baseband apparatus and a radio frequency apparatus. The radio frequency apparatus may be remotely disposed relative to the baseband apparatus. For example, a remote radio unit (remote radio unit, RRU) is remotely disposed relative to a BBU.

Communication between the RAN device and a terminal complies with a specified protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include functions of protocol layers such as a PDCP layer, an RLC layer, a MAC layer, and a physical layer. In an implementation, a service data adaptation (service data adaptation protocol, SDAP) layer may further be included above the PDCP layer.

The RAN device may implement the functions of the protocol layers such as the RRC layer, the PDCP layer, the RLC layer, and the MAC layer by using one node, or may implement the functions of these protocol layers by using a plurality of nodes. For example, in an evolved structure, the RAN device may include a centralized unit (centralized unit, CU) and a distributed unit (distributed unit, DU). A plurality of DUs may be centrally controlled by one CU. As shown in FIG. 2, the CU and the DU may be divided based on protocol layers of a wireless network. For example, functions of the PDCP layer and a protocol layer above the PDCP layer are set on the CU, and functions of protocol layers below the PDCP layer, such as the RLC layer and the MAC layer, are set on the DU.

Division into the protocol layers is merely an example, and division may alternatively be performed at another protocol layer, for example, the RLC layer. Functions of the RLC layer and a protocol layer above the RLC layer are set on the CU, and a function of a protocol layer below the RLC layer are set on the DU. Alternatively, division is performed in a protocol layer, for example, a part of functions of the RLC layer and a function of a protocol layer above the RLC layer are set on the CU, and a remaining function of the RLC layer and a function of a protocol layer below the RLC layer are set on the DU. In addition, division may alternatively be performed in another manner. For example, division is performed based on a latency. A function whose processing time needs to satisfy a latency requirement is set on the DU, and a function whose processing time does not need to satisfy the latency requirement is set on the CU.

In addition, the radio frequency apparatus may be not placed in the DU but is placed remotely from the DU, or may be integrated into the DU, or a part is placed remotely from the DU and a remaining part is integrated into the DU. This is not limited herein.

Continuing to refer to FIG. 3. Compared with the network architecture shown in FIG. 2, a control plane (CP) and a user plane (UP) of a CU may further be separated into different entities for implementation, and the different entities are a control plane CU entity (CU-CP entity) and a user plane CU entity (CU-UP entity).

In the foregoing network architecture, signaling generated by the CU may be sent to a terminal by using the DU, or signaling generated by the terminal may be sent to the CU by using the DU. The DU may transparently transmit the signaling to the terminal or the CU by directly encapsulating the signaling at a protocol layer without parsing the signaling. In the following embodiments, if such transmission of signaling between the DU and the terminal is involved, that the DU sends or receives the signaling includes this scenario. For example, signaling at an RRC layer or a PDCP layer is finally processed as signaling at a PHY layer and sent to the terminal, or is converted from received signaling at the PHY layer. In the architecture, the signaling at the RRC layer or the PDCP layer may further be considered to be sent by the DU, or sent by the DU and a radio frequency apparatus.

In the foregoing embodiments, the CU may be classified as a network device on a RAN side. In addition, the CU may alternatively be classified as a network device on a CN side. This is not limited herein.

An apparatus in the following embodiments of this application may be located in a terminal or a network device based on functions implemented by the apparatus. When the foregoing CU-DU structure is used, the network device may be a CU node, a DU node, or a RAN device including a CU node and a DU node.

For ease of understanding the content of this application, the following describes some communication terms involved in this application. It should be noted that this part of content also serves as a part of invention content of this application.

A random access process refers to a process from a moment at which a terminal sends a random access signal in an attempt to connect to a network to a moment at which a basic signaling connection is established between the terminal and a network device. The random access signal may be used to initiate random access. For example, the random access signal may be a random access preamble (random access preamble). Optionally, the random access signal may alternatively be a demodulation reference signal (demodulation reference signal, DMRS). The terminal may exchange information with the network device by using the random access process, to implement uplink time synchronization with a communication system. Optionally, the terminal may also request a resource or transmit data by using the random access process. In this embodiment of this application, the random access process may also be referred to as random access, a random access channel process, or a random access manner. The names are not distinguished in this application, and may be alternatively used in the following descriptions.

The random access process may include a contention-based random access process and a contention-free random access process. The embodiments of this application are mainly described by using an example of the contention-based random access process. The contention-based random access process may include a four-step random access process and a two-step random access process. The following separately describes the two processes.

### a. Four-step random access process

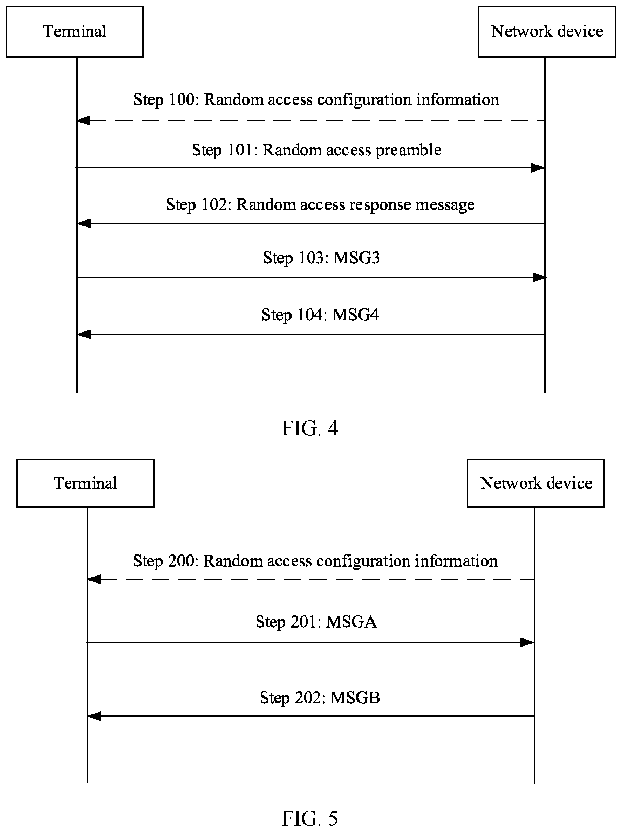

FIG. 4 is a schematic diagram of a four-step random access process according to an embodiment of this application. As shown in FIG. 4, the four-step random access process provided in this application includes the following steps.

Step 100: A network device sends random access configuration information to a terminal, and the terminal may receive the random access configuration information from the network device. The random access configuration information is used to configure a parameter of four-step random access, for example, may be used to configure a four-step random access resource. The four-step random access resource may include a time-frequency resource, a preamble set, and the like used for the four-step random access. This step is used to make preparations before the four-step random access process, and does not belong to the steps included in the four-step random access process.

Step 101: The terminal sends a random access preamble (preamble) to the network device on the pre-configured four-step random access resource, and the network device receives the preamble from the terminal. The preamble is also referred to as a first message or a message 1 (MSG1) in the random access process.

The preamble sent by the terminal to the network device in step 101 may be a preamble selected from the preamble set that is obtained in step 100 and that is used for the four-step random access.

Step 102: After detecting the preamble sent by the terminal, the network device sends a random access response (random access response, RAR) message to the terminal, and the terminal receives the RAR message from the network device. The RAR message is also referred to as a second message or a message 2 (MSG2) in the four-step random access process. The message 2 may include one or more of the following information: an identifier or index of the detected preamble, uplink time synchronization information, an uplink resource allocated to the terminal to send a message 3, and a backoff indicator (backoff indicator, BI). Certainly, the message 2 may further include other information. The identifier of the preamble is, for example, a random access preamble identifier (random access preamble identifier, RAPID). For a terminal that fails to perform random access, the network device may send the backoff indicator to the terminal. The backoff indicator may be used to indicate a time value, and the time value is used to determine a backoff time range. When the random access process fails, the terminal may select backoff duration from the backoff time range, and may reuse, only after the selected backoff duration ends, the four-step random access resource configured by the network device for the terminal in step 100. It should be noted that if the network device does not receive the preamble sent by the terminal, the message 2 sent by the network device does not include the identifier of the preamble corresponding to the terminal.

Step 103: The terminal sends uplink data to the network device based on the MSG2, and the network device receives the uplink data from the terminal. The uplink data is also referred to as a third message or the message 3 (MSG3) in the four-step random access process. The MSG3 may include different scenario information identifiers, for example, an identifier (UE-ID) of the terminal. For example, for a scenario in which the terminal performs radio resource control (radio resource control, RRC) connection reestablishment, a corresponding scenario information identifier is a cell radio network temporary identifier (cell radio network temporary identifier, C-RNTI). The MSG2 may carry the uplink resource and a TA command (command). After receiving the MSG2, the terminal sends, by using a TA value indicated by the TA command, the MSG3 on the uplink resource indicated by the MSG2.

Step 104: When detecting the message 3, the network device sends a contention resolution message to the terminal, and the terminal receives the contention resolution message from the network device. The contention resolution message is also referred to as a fourth message or a message 4 (MSG4) in the four-step random access process. The message 4 may include a part of content of the message 3 or a physical downlink control channel (physical downlink control channel, PDCCH) including the C-RNTI, that is, the message 4 includes the C-RNTI carried by the PDCCH. For example, if the network device does not receive the uplink data sent by the terminal, the message 4 may carry an identifier of the terminal. If the network device does not receive the uplink data sent by the terminal, the message 4 sent by the network device does not include the identifier of the terminal. When receiving the message 4, the terminal may determine, based on whether the identifier, carried in the message 4, of the terminal and an identifier of the terminal are consistent, whether the terminal successfully accesses the network device. If the identifier carried in the message 4 and the identifier of the terminal are consistent, it is determined that the terminal successfully accesses the network device; or if the identifier carried in the message 4 and the identifier of the terminal are inconsistent, it is determined that the terminal fails to access the network device.

### b. Two-step random access process

FIG. 5 is a schematic diagram of a two-step random access process according to an embodiment of this application. As shown in FIG. 5, the two-step random access process provided in this application includes the following steps.

Step 200: A network device sends random access configuration information to a terminal, and the terminal may receive the random access configuration information from the network device. The random access configuration information is used to configure a parameter of two-step random access, for example, may be used to configure a two-step random access resource. The two-step random access resource may include a time-frequency resource, a preamble set, and the like used for the two-step random access. This step is used to make preparations before the two-step random access process, and does not belong to the steps included in the two-step random access process.

Step 201: The terminal sends a message A (MSGA) to the network device on the pre-configured two-step random access resource, and the network device receives the MSGA from the terminal. The MSGA includes a random access signal and information used for contention resolution.

The random access signal is, for example, a preamble and/or a DMRS. Optionally, the random access signal may be used by the network device to receive the information used for contention resolution. For example, the network device may determine, based on the random access signal, a transmission boundary at which the terminal transmits the information used for contention resolution, for example, a position at which the terminal transmits the information used for contention resolution, for example, a start position and/or an end position of a slot (slot). Alternatively, the random access signal may be used to assist the network device in demodulating the information used for contention resolution. The information used for contention resolution may also be referred to as data or a payload (payload). The data may include one or more of the following information: an identifier of the terminal, a random number, and a cause value of random access. The identifier of the terminal may be an identifier allocated by a RAN, or may be an identifier allocated by a CN, for example, a cell radio network temporary identifier (cell radio network temporary identifier, C-RNTI), a part of bits (bits) of a 5G S-temporary mobile subscriber identity (5G S-temporary mobile subscriber identity, 5G S-TMSI) (the identifier of the terminal allocated by the core network), or a part of bits (bits) of a system architecture evolution temporary mobile subscriber identity (SAE-temporary mobile subscriber identity, S-TMSI) (the identifier of the terminal allocated by the core network). The identifier of the terminal may be all carried in the data, or may be partially carried in the data and partially carried in the random access signal. The cause value may include information about a type or a cause of the random access, and may be an RRC message. In a possible scenario, the data may include a C-RNTI media access control control element (media access control control element, MAC CE). In this case, the data may further include a buffer status report (buffer status report, BSR) MAC CE and/or a power headroom report (power headroom report, PHR) MAC CE. The BSR is used to report a buffer status of the terminal, and the PHR is used to report a power headroom of the terminal, so that the network device performs effective scheduling during scheduling, and a waste of resources is reduced.

The preamble sent by the terminal to the network device in step 201 may be a preamble selected from the preamble set that is obtained in step 200 and that is used for the two-step random access.

Step 202: After receiving the MSGA, the network device sends a message B (MSGB) to the terminal, and the network device receives the MSGB from the terminal.

The MSGB may include a first response to the random access signal, or include a second response to the data, or include both the first response and the second response. For example, the first response may include an identifier of the random access signal. For example, when the random access signal is a preamble, the first response may include an RAPID. The second response may include contention resolution information. For example, the contention resolution information is obtained based on the information used for contention resolution, and may be a part or all of the information used for contention resolution. The contention resolution information indicates that random access succeeds or contention resolution succeeds. In addition, other information in a response message may be carried in the first response, or may be carried in the second response, or may be independent of the first response and the second response.

The first response may be referred to as a random access response message, and the second response may be referred to as the contention resolution message. It should be noted that if the data is successfully decoded, and the terminal does not conflict with another terminal, the network device may send the contention resolution message to the terminal. If the data fails to be decoded, the network device may send an uplink grant to the terminal, and the terminal may transmit the data in the MSGA by using the uplink grant.

In the embodiments of this application, both the terminal and the network device may support the four-step random access process and the two-step random access process. Unless otherwise specified, the terminal involved in this application is a terminal that can support both the four-step random access process and the two-step random access process, and the network device involved in this application is a network device that can support both the four-step random access process and the two-step random access process.

Using the communication system shown in FIG. 1 as an example, it is assumed that the RAN 110 is a RAN that can support both the two-step random access process and the four-step random access process, and the terminal 130 is a terminal that can support both the two-step random access process and the four-step random access process. In this case, the RAN 110 may configure a two-step random access parameter and/or a four-step random access parameter for the terminal 130. When the RAN 110 configures both the two-step random access parameter and the four-step random access parameter for the terminal 130, the terminal 130 may initiate the two-step random access process by using the two-step random access parameter, or may initiate the four-step random access process by using the four-step random access parameter. For a scenario in which the two types of random access processes coexist, if a random access process currently performed by the terminal 130 fails, currently, there is no corresponding solution to how the terminal 130 performs processing.

In view of the foregoing problem, the embodiments of this application provide a plurality of random access methods, to adapt to different scenarios.

For the four-step random access process, as described above, for a terminal that fails to perform random access, the network device may send the backoff indicator to the terminal. The terminal may select the backoff duration from the backoff time range, and re-select a four-step random access resource after the selected backoff duration ends. The terminal can further initiate a new four-step random access process by using the re-selected four-step random access resource. A latency of this backoff method is greater.

For the two-step random access process, when random access fails, there may be two possible implementations. In a possible implementation, when the random access fails, the network device may include a backoff indicator in the MSGB, where a meaning of the backoff indicator is the same as that of the backoff indicator in the four-step random access process. In another possible implementation, when the random access fails, the network device does not include a backoff indicator in the MSGB.

In a first scenario, for both the four-step random access process and the two-step random access process, when a terminal fails to perform random access, a network device may send a backoff indicator to the terminal. However, the terminal receives only one backoff indicator each time. For this scenario, the backoff indicator sent by the network device to the terminal may be associated with a four-step random access resource or a two-step random access resource. It may be understood that when the backoff indicator is associated with the four-step random access resource, the backoff indicator is the backoff indicator in the four-step random access process. Correspondingly, when the backoff indicator is associated with the two-step random access resource, the backoff indicator is the backoff indicator in the two-step random access process.

For the first scenario, an embodiment of this application provides a random access method. A terminal obtains first-type random access resources and second-type random access resources, where the first-type random access resources are used for first-type random access, and the second-type random access resources are used for second-type random access. The terminal sends a first message to a network device by using a resource in the first-type random access resources, where the first message is used to initiate the first-type random access. The terminal receives a backoff indicator from the network device, where the backoff indicator is associated with the first-type random access resources and the second-type random access resources. When the backoff indicator is associated with the first-type random access resources, and when the first-type random access fails, the terminal performs random-access-resource selection in the second-type random access resources within backoff duration determined based on the backoff indicator. When the backoff indicator is associated with the second-type random access resources, and when the first-type random access fails, the terminal performs random-access-resource selection in the first-type random access resources within backoff duration determined based on the backoff indicator.

In a second scenario, for the four-step random access process, when a terminal fails to perform random access, a network device sends a backoff indicator to the terminal. In addition, for the two-step random access process, when a terminal fails to perform random access, the network device does not send a backoff indicator to the terminal. For this scenario, the backoff indicator sent by the network device to the terminal may be associated with only a four-step random access resource.

For the second scenario, an embodiment of this application provides a random access method. A terminal obtains four-step random access resources and two-step random access resources, where the four-step random access resources are used for a four-step random access process, and the two-step random access resources are used for a two-step random access process. The terminal sends a preamble to a network device by using a resource in the four-step random access resources, to initiate the four-step random access process. The terminal receives a backoff indicator from the network device. When four-step random access fails, the terminal performs random-access-resource selection in the two-step random access resources within backoff duration determined based on the backoff indicator.

According to the foregoing method provided in this embodiment of this application, for a scenario in which the two types of random access processes coexist, if a random access process currently performed by the terminal fails, the terminal can select a random access resource within the backoff duration determined based on the backoff indicator, and does not need to wait until the backoff duration ends to perform random-access-resource selection, thereby reducing a latency of the random-access-resource selection. Further, a latency of re-initiating a random access process by the terminal can be reduced, thereby improving user experience.

In a third scenario, for both the four-step random access process and the two-step random access process, when a terminal fails to perform random access, a network device may send a backoff indicator to the terminal. The terminal may receive two backoff indicators each time.

For the third scenario, an embodiment of this application provides a random access method. A terminal obtains first-type random access resources and second-type random access resources, where the first-type random access resources are used for first-type random access, and the second-type random access resources are used for second-type random access. The terminal sends a first message to a network device by using a resource in the first-type random access resources, where the first message is used to initiate the first-type random access. The terminal receives a first backoff indicator and a second backoff indicator from the network device, where the first backoff indicator is associated with the first-type random access, and the second backoff indicator is associated with the second-type random access. The first backoff indicator is used to indicate a first time value, and the first time value is used to determine a first backoff time range. The second backoff indicator is used to indicate a second time value, and the second time value is used to determine a second backoff time range. When the first-type random access fails, the terminal performs random-access-resource selection in the first-type random access resources after first backoff duration selected from the first backoff time range, or performs random-access-resource selection in the second-type random access resources after second backoff duration selected from the second backoff time range.

According to the foregoing method provided in this embodiment of this application, for a scenario in which the two types of random access processes coexist, if a random access process currently performed by the terminal fails, the terminal can separately perform backoff based on the backoff indicators corresponding to the two types of random access.

The following separately describes the random access methods provided in the foregoing scenarios.

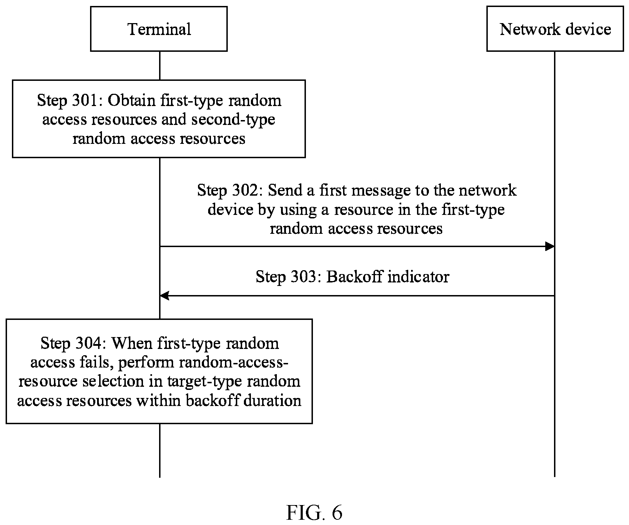

FIG. 6 is an implementation flowchart of a random access method according to an embodiment of this application. Refer to FIG. 6. In FIG. 6, descriptions are provided for the foregoing first scenario. The method may include, but is not limited to the following steps.

Step 301: A terminal obtains first-type random access resources and second-type random access resources, where the first-type random access resources are used for first-type random access, and the second-type random access resources are used for second-type random access.

The random access resource may include at least one resource of a time domain resource, a frequency domain resource, or a preamble.

In this embodiment of this application, the first-type random access may be a two-step random access process or a four-step random access process, and the second-type random access may be the two-step random access process or the four-step random access process. In this application, the "first-type" and the "second-type" are used to distinguish between different random access processes, and do not represent an importance degree or a sequence. In other words, the first-type random access and the second-type random access in this application are different random access. For example, when the first-type random access is the four-step random access process, the second-type random access may be the two-step random access process. For another example, when the first-type random access is the two-step random access process, the second-type random access may be the four-step random access process.

It may be understood that when the first-type random access is the four-step random access process, correspondingly, the first-type random access resources may be understood as four-step random access resources, where the four-step random access resources are resources used for the four-step random access process. Alternatively, when the first-type random access is the two-step random access process, correspondingly, the first-type random access resources may be understood as two-step random access resources, where the two-step random access resources are resources used for the two-step random access process. Similarly, when the second-type random access is the four-step random access process, correspondingly, the second-type random access resources may be understood as four-step random access resources. Alternatively, when the second-type random access is the two-step random access process, correspondingly, the second-type random access resources may be understood as two-step random access resources.

In this embodiment of this application, the first-type random access resources and the second-type random access resources may be determined by using random access configuration information sent by a network device to the terminal (refer to step 100 in FIG. 1 or step 200 in FIG. 2). It may be understood as that the first-type random access resources and the second-type random access resources may be configured by the network device for the terminal.

Optionally, the first-type random access resources and the second-type random access resources may include overlapping time-frequency resources, but random access signal resources (for example, preamble resources) included in the first-type random access resources and the second-type random access resources are different. Alternatively, the first-type random access resources and the second-type random access resources include different time-frequency resources, but may include overlapping random access signal resources. Alternatively, time-frequency resources of the first-type random access resources and the second-type random access resources are different, and random access signal resources of the first-type random access resources and the second-type random access resources are different. In the following embodiments, the first-type random access resources and the second-type random access resources may be time-frequency resources or random access signal resources, or include both a time-frequency resource and a random access signal resource.

Optionally, the first-type random access resources and the second-type random access resources may be configured in a same configuration message, or may be configured by using different configuration messages.

Step 302: The terminal sends a first message to the network device by using a resource in the first-type random access resources, where the first message is used to initiate the first-type random access.

In this embodiment of this application, when the first-type random access resources are the four-step random access resources, the first message may include a random access signal, for example, a preamble. In this case, the first message may be understood as the message 1 in FIG. 4, and is used to initiate the four-step random access process. Alternatively, when the first-type random access resources are the two-step random access resources, the first message may include a random access signal and information used for contention resolution. In this case, the first message may be understood as the message A in FIG. 5, and is used to initiate the two-step random access process.

Step 303: The terminal receives a backoff indicator from the network device, where the backoff indicator is used to indicate a time value, and the time value is used to determine a backoff time range.

It should be noted that the backoff indicator received by the terminal in step 303 may be associated with the first-type random access resources or the second-type random access resources. This is not limited in this application.

In a possible implementation, because the terminal initiates the first-type random access, when the terminal receives the backoff indicator, it may be considered by default that the backoff indicator is associated with the first-type random access resource or the first-type random access.

In another possible implementation, the terminal may determine, by using an implicit indication or an explicit indication, a random-access-resource type associated with the backoff indicator received in step 303. The following separately describes the implicit indication and the explicit indication.

First, the explicit indication is described. The terminal receives a first indication from the network device, where the first indication is used to indicate the random-access-resource type associated with the backoff indicator. For example, the first indication may be used to indicate that the random-access-resource type associated with the backoff indicator is a random-access-resource type associated with the first-type random access resources or a random-access-resource type associated with the second-type random access resources.

Second, the implicit indication is described. The terminal determines, based on a random-access-resource type corresponding to the first message, the random-access-resource type associated with the backoff indicator. The random-access-resource type corresponding to the first message may be understood as a type of the random access resource used to send the first message. For example, when the terminal sends the first message by using the four-step random access resource, the random-access-resource type corresponding to the first message is a random-access-resource type associated with the four-step random access resource; or when the terminal sends the first message by using the two-step random access resource, the random-access-resource type corresponding to the first message is a random-access-resource type associated with the two-step random access resource. For another example, if the first message includes the random access signal, and is used to initiate the four-step random access process, the random-access-resource type corresponding to the first message is a random-access-resource type associated with the four-step random access resource. If the first message includes the random access signal and the information used for contention resolution, and is used to initiate the two-step random access process, the random-access-resource type corresponding to the first message is a random-access-resource type associated with the two-step random access resource.

An implicit indication manner is described by using an example. For example, assuming that the random-access-resource type corresponding to the first message is the random-access-resource type associated with the four-step random access resource, the terminal may determine an RNTI based on the four-step random access resource, and subsequently determine, by using the backoff indicator received by using the RNTI, that the random-access-resource type associated with the first message is the random-access-resource type associated with the four-step random access resource. Similarly, assuming that the random-access-resource type corresponding to the first message is the random-access-resource type associated with the two-step random access resource, the terminal may determine another RNTI based on the two-step random access resource, and subsequently determine, by using the backoff indicator received by using the RNTI, that the random-access-resource type associated with the first message is the random-access-resource type associated with the two-step random access resource.

Step 304: The terminal performs random-access-resource selection in target-type random access resources within backoff duration when the first-type random access fails. The target-type random access resources include the first-type random access resources or the second-type random access resources.

The backoff duration is duration selected from the backoff time range. In a possible implementation, the terminal may determine the backoff duration in the following manner: The terminal determines a range from zero to the time value indicated by the backoff indicator as the backoff time range, and randomly select a time value from the backoff time range as the backoff duration. For example, the time value indicated by the backoff indicator is 10 ms. The terminal may determine a range from 0 to 10 ms as the backoff time range, and then may randomly select a time value from the backoff time range that is from 0 to 10 ms as the backoff duration, for example, may select 5 ms as the backoff duration, or may select 8 ms as the backoff duration.

Optionally, the first indication may further be used to indicate the target-type random access resources, namely, a target type of the random access resource on which random-access-resource selection is performed in step 304. For example, the first indication may be used to indicate that the random access resource on which random-access-resource selection is performed in step 304 is the first-type random access resource or the second-type random access resource.

In a possible implementation, when the random-access-resource type associated with the backoff indicator is the random-access-resource type associated with the first-type random access resources, the target-type random access resources are the second-type random access resources.

In another implementation, when the random-access-resource type associated with the backoff indicator is the random-access-resource type associated with the second-type random access resources, the target-type random access resources are the first-type random access resources.

In this embodiment of this application, the terminal may perform step 304 in but is not limited to the following manner.

When the first-type random access fails, and when a first condition is satisfied within the backoff duration, the terminal performs random-access-resource selection in the target-type random access resources within the backoff duration.

In addition, when the first-type random access fails, and when the first condition is not satisfied within the backoff duration, the terminal may perform random-access-resource selection in the first-type random access resources or the second-type random access resources after the backoff duration.

The first condition includes any one of the following conditions.

Condition 1: A reference signal received power (reference signal received power, RSRP) included in a synchronization signal block (synchronization signal block, SSB) corresponding to the target-type random access resources is greater than or equal to a first preset threshold. Optionally, the first preset threshold may be configured by the network device.

Condition 2: Reference signal received quality (reference signal received quality, RSRQ) included in an SSB corresponding to the target-type random access resources is greater than or equal to a second preset threshold. Optionally, the second preset threshold may be configured by the network device.

Condition 3: Quality of a physical downlink control channel (physical downlink control channel, PDCCH) included in an SSB corresponding to the target-type random access resources is greater than or equal to a third preset threshold. Optionally, the third preset threshold may be configured by the network device.

Condition 4: A first timer expires, where the first timer is a timer started for the target-type random access resources when the first-type random access is initiated or a timer started for the target-type random access resources after the first message is sent. A function of the first timer is to limit use of the target-type random access resources during running of the first timer, or to limit initiating random access by using the target-type random access resources. It may be understood as that the target-type random access resources cannot be used to initiate random access within timing duration of the first timer. That the first message is started after the first message is sent may be understood as that the first timer is started when sending of the first message is completed, or may be understood as that the first message is started within preset duration that is after sending of the first message is completed.

Condition 5: The target-type random access resources arrive earlier. It may be understood as that a start moment of the target-type random access resources is earlier than that of an another-type random access resource. In this application, the target-type random access resource is a relative concept to the another-type random access resource. For example, when the target-type random access resources are the first-type random access resources, the another-type random access resource is the second-type random access resource. Conversely, when the target-type random access resources are the second-type random access resources, the another-type random access resource is the first-type random access resource.

In a possible implementation, the terminal may further perform, after the backoff duration, random-access-resource selection in random access resources of the random-access-resource type associated with the backoff indicator. For example, the random-access-resource type associated with the backoff indicator is the random-access-resource type associated with the first-type random access resources. The terminal may further perform, after the backoff duration, random-access-resource selection in the first-type random access resources. For another example, the random-access-resource type associated with the backoff indicator is the random-access-resource type associated with the second-type random access resources. The terminal may further perform, after the backoff duration, random-access-resource selection in the second-type random access resources.

In this embodiment of this application, if the terminal selects a random access resource within the backoff duration, the terminal may initiate random access by using the random access resource selected within the backoff duration. Alternatively, if the terminal selects a random access resource after the backoff duration, the terminal may initiate random access by using the random access resource selected after the backoff duration.

In this embodiment of this application, before performing step 304, the terminal may further determine, in but not limited to the following manner, that the first-type random access fails.

Manner 1: When the terminal does not receive, within first preset duration, a response message sent by the network device for the first message, the terminal determines that the first-type random access fails. For example, the first message is the message 1 in the four-step random access process, and the first-type random access is the four-step random access. If the terminal does not receive, within the first preset duration, the message 2 sent by the network device, the terminal determines that the four-step random access fails. For another example, the first message is the message A in the two-step random access process, and the first-type random access is the two-step random access. If the terminal does not receive, within the first preset duration, the message B sent by the network device, the terminal determines that the two-step random access fails.

Manner 2: When the terminal does not receive, within second preset duration, a contention resolution message sent by the network device for the first message, the terminal determines that the first-type random access fails.

It should be noted that the first preset duration and the second preset duration may be the same or different. The first preset duration and the second preset duration may be configured by the network device, and may be different values to be adapted to different scenarios. This is not limited.

It may be understood that the network device or the terminal may perform a part or all of the steps in the foregoing embodiment. These steps or operations are merely examples. In this embodiment of this application, other operations or variants of operations may further be performed. In addition, the steps may be performed in a sequence different from that presented in the foregoing embodiment, and not all operations in the foregoing embodiment may need to be performed.

The following uses two examples to describe the random access method provided in FIG. 6 in this application.

### Example 1

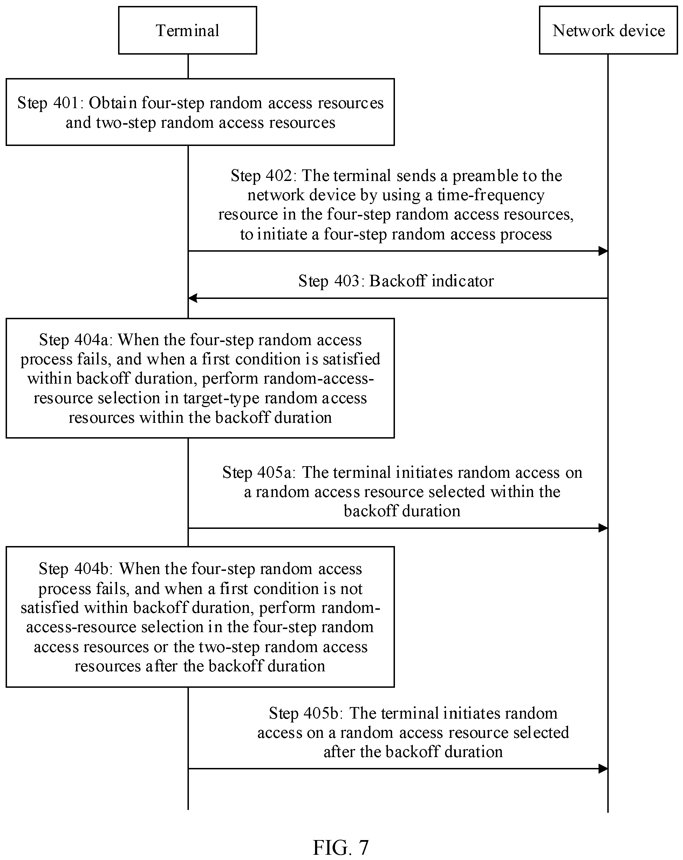

FIG. 7 is an implementation flowchart of a random access method according to an embodiment of this application. Refer to FIG. 7. In FIG. 7, an example in which first-type random access is a four-step random access process, first-type random access resources are four-step random access resources, second-type random access is a two-step random access process, and second-type random access resources are two-step random access resources is used for description. The method may include, but is not limited to, the following steps.

Step 401: A terminal obtains the four-step random access resources and the two-step random access resources. The four-step random access resources and the two-step random access resources may include a time-frequency resource, a preamble resource, or a time-frequency resource and a preamble resource.

Step 402: The terminal sends a preamble to a network device by using the time-frequency resource in the four-step random access resources, to initiate the four-step random access process. When the preamble resource included in the four-step random access resources and the preamble resource included in the two-step random access resources are different, the preamble is a preamble included in the four-step random access resources.

Step 403: The terminal receives a backoff indicator from the network device. The backoff indicator is associated with the four-step random access resources or the four-step random access.

Optionally, the terminal may determine, based on indication information sent by the network device, that the backoff indicator is associated with the four-step random access resources or the four-step random access. Alternatively, the terminal may determine, based on a random-access-resource type corresponding to the preamble, that the backoff indication is associated with the four-step random access resources or the four-step random access.

Step 404a: When the four-step random access process fails, and when a first condition is satisfied within backoff duration, the terminal performs random-access-resource selection in target-type random access resources within the backoff duration. The target-type random access resources are the two-step random access resources.

Step 404b: When the four-step random access process fails, and when a first condition is not satisfied within backoff duration, the terminal performs random-access-resource selection in the four-step random access resources or the two-step random access resources after the backoff duration.

One of step 404a and step 404b may be selected and performed.

Step 405a: If step 404a is performed, the terminal may initiate random access on a random access resource selected within the backoff duration.

Step 405b: If step 404b is performed, the terminal may initiate random access on a random access resource selected after the backoff duration.

It should be noted that FIG. 7 is merely an example. In actual application, the method shown in FIG. 7 may alternatively include more or fewer steps. This is not limited in this application.

### Instance 2

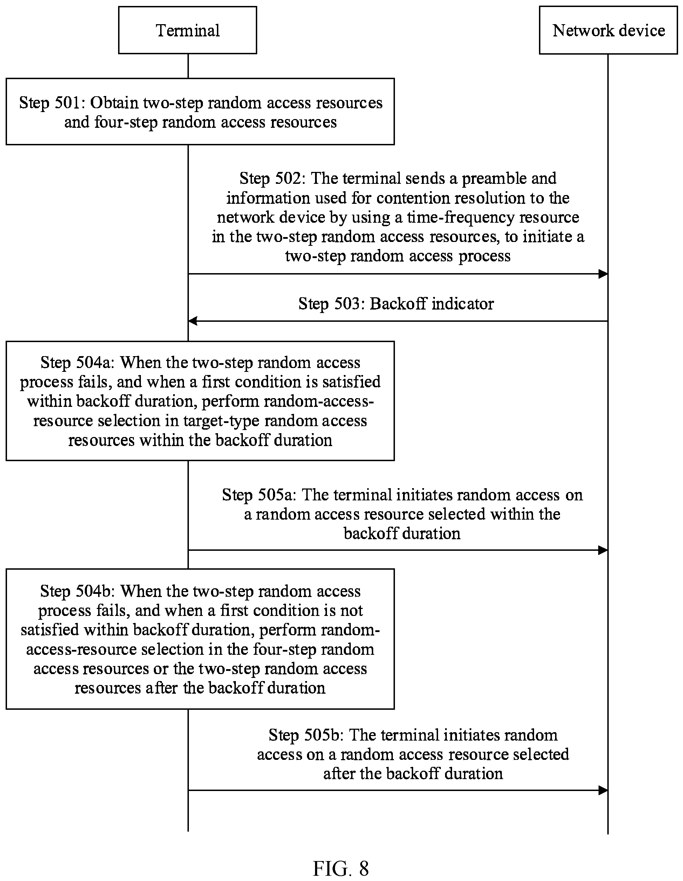

FIG. 8 is an implementation flowchart of a random access method according to an embodiment of this application. Refer to FIG. 8. In FIG. 8, an example in which first-type random access is a two-step random access process, first-type random access resources are two-step random access resources, second-type random access is a four-step random access process, and second-type random access resources are four-step random access resources is used for description. The method may include, but is not limited to, the following steps.

Step 501: A terminal obtains the two-step random access resources and the four-step random access resources. The four-step random access resources and the two-step random access resources may include a time-frequency resource, a preamble resource, or a time-frequency resource and a preamble resource.

Step 502: The terminal sends a preamble and information used for contention resolution to a network device by using the time-frequency resource in the two-step random access resources, to initiate the two-step random access process. When the preamble resource included in the four-step random access resources and the preamble resource included in the two-step random access resources are different, the preamble is a preamble included in the two-step random access resource.

Step 503: The terminal receives a backoff indicator from the network device. The backoff indicator is associated with the two-step random access resources or the two-step random access.

Optionally, the terminal may determine, based on indication information sent by the network device, that the backoff indicator is associated with the two-step random access resources or the two-step random access. Alternatively, the terminal may determine, based on a random-access-resource type corresponding to the preamble, that the backoff indication is associated with the two-step random access resources or the two-step random access.

Step 504a: When the two-step random access process fails, and when a first condition is satisfied within backoff duration, the terminal performs random-access-resource selection in target-type random access resources within the backoff duration. The target-type random access resources are the four-step random access resources.

Step 504b: When the two-step random access process fails, and when a first condition is not satisfied within backoff duration, the terminal performs random-access-resource selection in the four-step random access resources or the two-step random access resources after the backoff duration.

One of step 504a and step 504b may be selected and performed.

Step 505a: If step 504a is performed, the terminal may initiate random access on a random access resource selected within the backoff duration.

Step 505b: If step 504b is performed, the terminal may initiate random access on a random access resource selected after the backoff duration.

It should be noted that FIG. 8 is merely an example. In actual application, the method shown in FIG. 8 may alternatively include more or fewer steps. This is not limited in this application.

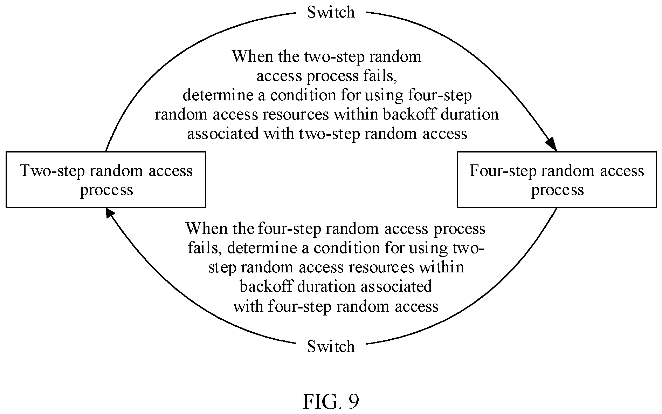

In conclusion, for the random access method provided in FIG. 6 of this application, that when the four-step random access process fails, if the terminal determines that the condition for using the two-step random access resources is satisfied within the backoff duration associated with the four-step random access, the terminal may select a random access resource in the two-step random access resources within the backoff duration associated with the four-step random access, to initiate the two-step random access process may be understood as that the four-step random access process is switched to the two-step random access process. Similarly, that when the two-step random access process fails, if the terminal determines that the condition for using the four-step random access resources is satisfied within the backoff duration associated with the two-step random access, the terminal may select a random access resource in the four-step random access resources within the backoff duration associated with the two-step random access, to initiate the four-step random access process may be understood as that the two-step random access process is switched to the four-step random access process. Refer to FIG. 9. In this way, for a scenario in which the two types of random access processes coexist, if a random access process currently performed by the terminal fails, the terminal can select a random access resource within the backoff duration, and does not need to wait until the backoff duration ends to perform random-access-resource selection, thereby reducing a latency of the random-access-resource selection. Further, a latency of re-initiating a random access process by the terminal can be reduced, thereby improving user experience.

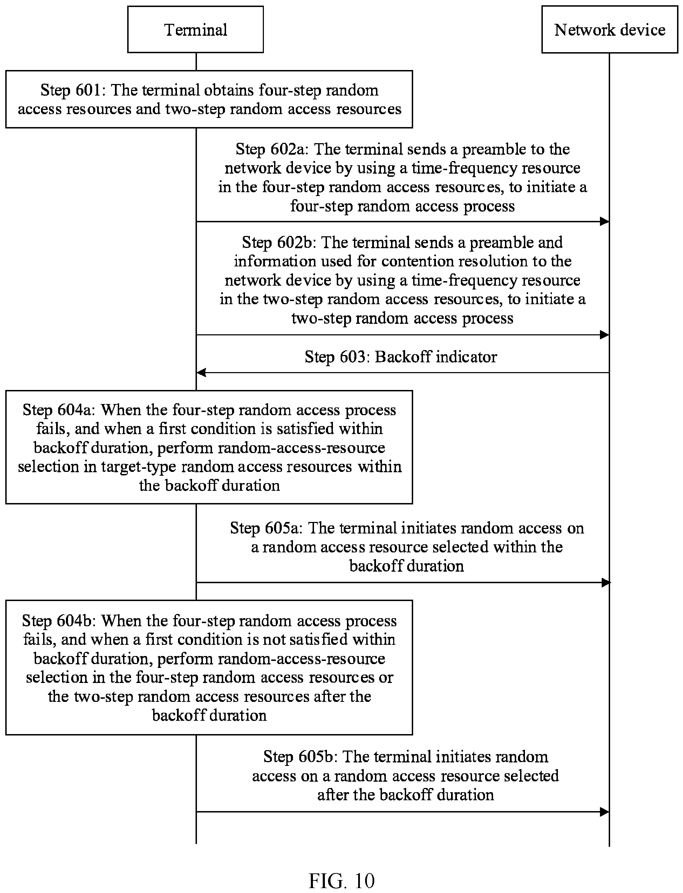

FIG. 10 is an implementation flowchart of a random access method according to an embodiment of this application. Refer to FIG. 10. In FIG. 10, descriptions are provided for the foregoing second scenario. The method may include, but is not limited to the following steps.

Step 601: A terminal obtains four-step random access resources and two-step random access resources. The four-step random access resources and the two-step random access resources may include a time-frequency resource, a preamble resource, or a time-frequency resource and a preamble resource.

Step 602a: The terminal sends a preamble to a network device by using the time-frequency resource in the four-step random access resources, to initiate a four-step random access process. When the preamble resource included in the four-step random access resources and the preamble resource included in the two-step random access resources are different, the preamble is a preamble included in the four-step random access resources.

Step 602b: The terminal sends a preamble and information used for contention resolution to the network device by using the time-frequency resource in the two-step random access resources, to initiate a two-step random access process. It may be understood that the preamble is a preamble included in the two-step random access resources.

In this embodiment, one of step 602a and step 602b is selected and performed.

Step 603: The terminal receives a backoff indicator from the network device. In the second scenario, for the two-step random access process, when the terminal fails to perform random access, the network device does not send the backoff indicator to the terminal. Therefore, the backoff indicator received by the terminal in step 603 is necessarily associated with the four-step random access resources or four-step random access.

Step 604a: When the four-step random access process fails, and when a first condition is satisfied within backoff duration, the terminal performs random-access-resource selection in target-type random access resources within the backoff duration. The target-type random access resources are the two-step random access resources.

Step 604b: When the four-step random access process fails, and when a first condition is not satisfied within backoff duration, the terminal performs random-access-resource selection in the four-step random access resources or the two-step random access resources after the backoff duration.

One of step 604a and step 604b may be selected and performed.

Step 605a: If step 604a is performed, the terminal may initiate random access on a random access resource selected within the backoff duration.

Step 605b: If step 604b is performed, the terminal may initiate random access on a random access resource selected after the backoff duration.

It should be noted that FIG. 10 is merely an example. In actual application, the method shown in FIG. 10 may alternatively include more or fewer steps. This is not limited in this application.

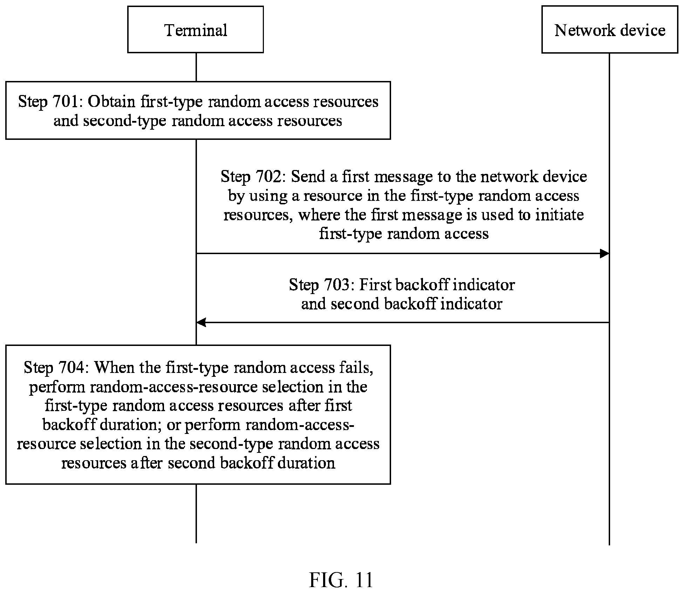

FIG. 11 is an implementation flowchart of a random access method according to an embodiment of this application. Refer to FIG. 11. In FIG. 11, descriptions are provided for the foregoing third scenario. The method may include, but is not limited to the following steps.

Operations performed in step 701 to step 702 are the same as those performed in step 301 to step 302, and details are not described herein again.

Step 703: The terminal receives a first backoff indicator and a second backoff indicator from the network device. The first backoff indicator is associated with the first-type random access, and the second backoff indicator is associated with the second-type random access. The first backoff indicator is used to indicate a first time value, and the first time value is used to determine a first backoff time range. The second backoff indicator is used to indicate a second time value, and the second time value is used to determine a second backoff time range.

In this embodiment of this application, the first backoff indicator and the second backoff indicator may be carried by using a same media access control (media access control, MAC) layer protocol data unit (protocol data unit, PDU), or may be carried by using different MAC PDUs. This application is mainly described by using an example in which the first backoff indicator and the second backoff indicator are carried by using a same MAC PDU.

In a possible implementation, the same MAC PDU used to carry the first backoff indicator and the second backoff indicator may further include first indication information and second indication information. The first indication information is used to indicate a random access manner or random-access-resource type corresponding to the first backoff indicator, and the second indication information is used to indicate a random access manner or random-access-resource type corresponding to the second backoff indicator.

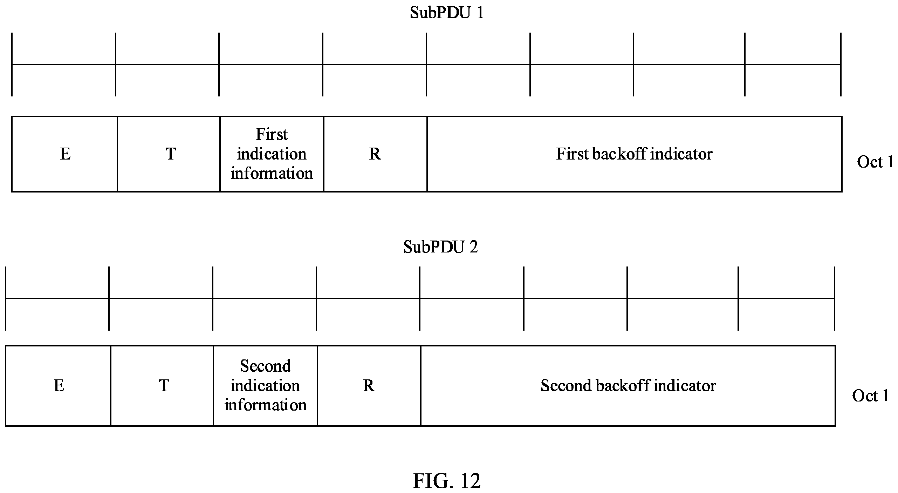

For example, the first backoff indicator and the second backoff indicator may be carried in different subPDUs of the same MAC PDU. The first backoff indicator and the first indication information may be carried in a same subPDU of the same MAC PDU, and the second backoff indicator and the second indication information may be carried in a same subPDU of the same MAC PDU. For example, as shown in FIG. 12, the first backoff indicator and the second backoff indicator are carried by using different subPDUs of a same MAC PDU. A subPDU 1 carrying the first backoff indicator further includes the first indication information, and a subPDU 2 carrying the second backoff indicator further includes the second indication information.

For example, both the first indication information and the second indication information may be one bit, and a random access manner or random-access-resource type corresponding to the backoff indicator may be indicated by using a value of the bit. For example, the first indication information is one bit. When a value of the one bit is 1, the value may be used to indicate that the random access manner corresponding to the first backoff indicator is the four-step random access or that the random-access-resource type corresponding to the first backoff indicator is a random-access-resource type associated with the four-step random access resource. When the value of the one bit is zero, the value may be used to indicate that the random access manner corresponding to the first backoff indicator is the two-step random access or that the random-access-resource type corresponding to the first backoff indicator is a random-access-resource type associated with the two-step random access resource. For another example, the second indication information is one bit. When a value of the one bit is 1, the value may be used to indicate that the random access manner corresponding to the second backoff indicator is the four-step random access or that the random-access-resource type corresponding to the second backoff indicator is a random-access-resource type associated with the four-step random access resource. When the value of the one bit is zero, the value may be used to indicate that the random access manner corresponding to the second backoff indicator is the two-step random access or that the random-access-resource type corresponding to the second backoff indicator is a random-access-resource type associated with the two-step random access resource.

In another possible implementation, the first backoff indicator and the second backoff indicator are located in different subPDUs (subPDUs) of a same MAC PDU. Based on this implementation, the terminal may determine, based on a sequence of arrival time points of the subPDUs in which the first backoff indicator and the second backoff indicator are separately located, the random access manner or random-access-resource type corresponding to the first backoff indicator and the random access manner or random-access-resource type corresponding to the second backoff indicator. For example, the first backoff indicator included in a subPDU that arrives earlier may be determined as a backoff indicator corresponding to the four-step random access manner or a type of the four-step random access resource. Correspondingly, the second backoff indicator included in a subPDU that arrives later may be determined as a backoff indicator corresponding to the two-step random access manner or a type of the two-step random access resource. Certainly, the first backoff indicator included in a subPDU that arrives earlier may alternatively be determined as the backoff indicator corresponding to the two-step random access manner or the type of the two-step random access resource. Correspondingly, the second backoff indicator included in a subPDU that arrives later may be determined as the backoff indicator corresponding to the four-step random access manner or the type of the four-step random access resource. This is not limited.

Step 704: When the first-type random access fails, the terminal performs random-access-resource selection in the first-type random access resources after first backoff duration; or performs random-access-resource selection in the second-type random access resources after second backoff duration. The first backoff duration is duration selected from the first backoff time range, and the second backoff duration is duration selected from the second backoff time range. In this embodiment of this application, for a method in which the terminal determines the first backoff duration and the second backoff duration, refer to the method for determining the backoff duration in step 304. Details are not described herein again.

In a possible implementation, when the first-type random access fails, if a random-access-resource selection condition is satisfied within the first backoff duration, the terminal selects, within the first backoff duration, a random access resource to initiate random access, and does not perform backoff based on the second backoff duration in this case. Alternatively, when the first-type random access fails, if a random-access-resource selection condition is satisfied within the second backoff duration, the terminal selects, within the second backoff duration, a random access resource to initiate random access, and does not perform backoff based on the first backoff duration in this case.

For example, when the first-type random access fails, if an RSRP, RSRQ, or quality of a PDCCH included in an SSB corresponding to the second-type random access resources is greater than or equal to a preset value within the first backoff duration, or a timer for disabling the second-type random access resources expires, or the second-type random access resources arrive earlier, the terminal may select the second-type random access resources within the first backoff duration, to initiate random access. In this case, backoff is not performed based on the second backoff duration.

For another example, when the first-type random access fails, if an RSRP, RSRQ, or quality of a PDCCH included in an SSB corresponding to the first-type random access resources is greater than or equal to a preset value within the first backoff duration, or a timer for disabling the first-type random access resources expires, or the first-type random access resources arrive earlier, the terminal may select the first-type random access resources within the second backoff duration, to initiate random access. In this case, backoff is not performed based on the first backoff duration.

In a possible implementation, when the first-type random access fails, if the random-access-resource selection condition is not satisfied within both the first backoff duration and the second backoff duration, the terminal may select a random access resource from the first-type random access resources or the second-type random access resources after the first backoff duration and the second backoff duration, to initiate random access.

Optionally, the terminal may select, from random access resources whose priority is higher in the first-type random access resources and the second-type random access resources, a resource used to initiate random access. A priority of the first-type random access resources and a priority of the second-type random access resources may be preset, or may be configured by the network device. Alternatively, a type of random access resources whose priority is higher or lower may be indicated by the network device. For example, it may be pre-configured that a priority of selecting the four-step random access resource is higher than a priority of selecting the two-step random access resource, or that a priority of selecting the two-step random access resource is higher than a priority of selecting the four-step random access resource. For another example, the network device may send a priority indication to the terminal, where the priority indication may be used to indicate a relationship between a priority of the four-step random access resource and a priority of the two-step random access resource. Using a one-bit indication as an example, when a value of the one bit is 1, it may be indicated that the priority of the four-step random access resource is higher than the priority of the two-step random access resource. Correspondingly, when the value of the one bit is zero, it may be indicated that the priority of the four-step random access resource is lower than the priority of the two-step random access resource.

The foregoing mainly describes the solutions provided in the embodiments of this application from a perspective of interaction between the terminal and the network device. It may be understood that to implement the foregoing functions, the terminal and the network device include corresponding hardware structures and/or software modules for performing the functions. With reference to the units and algorithm steps described in the embodiments disclosed in this application, the embodiments of this application can be implemented in a form of hardware or a combination of hardware and computer software. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of the technical solutions of the embodiments of this application.

In the embodiments of this application, division into functional units may be performed on the terminal and the network device based on the foregoing method examples. For example, each functional unit may be obtained through division based on a corresponding function, or two or more functions may be integrated into one processing unit. The integrated unit may be implemented in a form of hardware, or may be implemented in a form of a software functional unit.

Based on a same inventive concept, the embodiments of this application further provide an apparatus configured to implement any one of the foregoing methods. For example, an apparatus is provided, including units (or means) configured to implement the steps performed by the terminal in any one of the foregoing methods. For another example, another apparatus is further provided. The apparatus includes units (or means) configured to implement steps performed by a network device in any one of the foregoing methods.

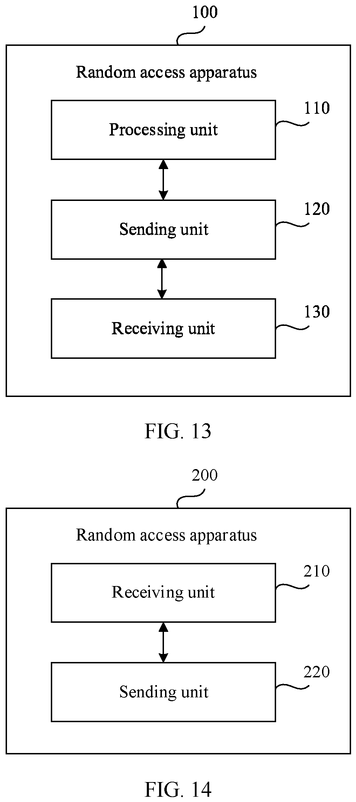

In a possible implementation, an embodiment of this application provides a random access apparatus 100. The random access apparatus 100 may be applied to a terminal. FIG. 13 is a schematic diagram of a structure of the random access apparatus 100 according to an embodiment of this application. Referring to FIG. 13, the random access apparatus 100 includes a processing unit 110. During implementation, the random access apparatus 100 may further include a sending unit 120 and a receiving unit 130.

When the random access apparatus 100 is configured to perform the method shown in FIG. 6, the processing unit 110 may be configured to obtain first-type random access resources and second-type random access resources, the sending unit 120 may be configured to send a first message to a network device by using a resource in the first-type random access resources, and the receiving unit 130 may be configured to receive a backoff indicator from the network device. The processing unit 110 may further be configured to perform random-access-resource selection in target-type random access resources within backoff duration when first-type random access fails.

When the random access apparatus 100 is configured to perform the method shown in FIG. 11, the processing unit 110 may be configured to obtain first-type random access resources and second-type random access resources, the sending unit 120 may be configured to send a first message to a network device by using a resource in the first-type random access resources, and the receiving unit 130 may be configured to receive a first backoff indicator and a second backoff indicator from the network device. When first-type random access fails, the processing unit 110 may further be configured to perform random-access-resource selection in the first-type random access resources after first backoff duration, or perform random-access-resource selection in the second-type random access resources after second backoff duration.

In the foregoing possible implementations, the first-type random access resources are used for the first-type random access, and the second-type random access resources are used for second-type random access. The first message is used to initiate the first-type random access. The backoff indicator is used to indicate a time value, and the time value is used to determine a backoff time range. The backoff duration is duration selected from the backoff time range, and the target-type random access resources include the first-type random access resources or the second-type random access resources.

In another possible implementation, an embodiment of this application further provides a random access apparatus 200. The random access apparatus 200 may be applied to a network device. FIG. 14 is a schematic diagram of a structure of the random access apparatus 200 according to an embodiment of this application. Referring to FIG. 14, the random access apparatus 200 includes a receiving unit 210 and a sending unit 220.

When the random access apparatus 200 is configured to perform the method shown in FIG. 6, the receiving unit 210 may be configured to receive a first message sent by a terminal by using a resource in first-type random access resources, and the sending unit 220 may be configured to send a backoff indicator to the terminal.

When the random access apparatus 200 is configured to perform the method shown in FIG. 11, the receiving unit 210 may be configured to receive a first message sent by a terminal by using a resource in first-type random access resources, and the sending unit 220 may be configured to send a first backoff indicator and a second backoff indicator to the terminal.

In the foregoing possible implementations, the first-type random access resources are used for first-type random access, and second-type random access resources are used for second-type random access. The first message is used to initiate the first-type random access. The first backoff indicator is associated with the first-type random access, and the second backoff indicator is associated with the second-type random access. The first backoff indicator is used to indicate a first time value, and the first time value is used to determine a first backoff time range. The second backoff indicator is used to indicate a second time value, and the second time value is used to determine a second backoff time range. First backoff duration is duration selected from the first backoff time range, and second backoff duration is duration selected from the second backoff time range.

When the random access apparatus 100 is applied to the terminal, the random access apparatus 200 is applied to the network device, and the method shown in FIG. 6 is performed, the following operations may further be performed.

In a possible implementation, the sending unit 220 may further be configured to send a first indication to the terminal, and the receiving unit 130 may further be configured to receive the first indication from the network device. The first indication is used to indicate a random-access-resource type associated with the backoff indicator.

In a possible implementation, the processing unit 110 may alternatively be configured to determine, based on a random-access-resource type corresponding to the first message, a random-access-resource type associated with the backoff indicator.

In a possible implementation, when the random-access-resource type associated with the backoff indicator is a random-access-resource type associated with the first-type random access resources, the target-type random access resources are the second-type random access resources; or when the random-access-resource type associated with the backoff indicator is a random-access-resource type associated with the second-type random access resources, the target-type random access resources are the first-type random access resources.

In a possible implementation, the processing unit 110 may further be configured to perform, after the backoff duration, random-access-resource selection in random access resources of the random-access-resource type associated with the backoff indicator.

In a possible implementation, the target-type random access resources are the second-type random access resources.

In a possible implementation, when a first condition is satisfied within the backoff duration, the processing unit 110 may further be configured to perform random-access-resource selection in the target-type random access resources within the backoff duration.

In a possible implementation, when a first condition is not satisfied within the backoff duration, the processing unit 110 may further be configured to perform random-access-resource selection in the first-type random access resources or the second-type random access resources after the backoff duration.

In a possible implementation, the processing unit 110 may further be configured to initiate random access by using a selected random access resource.

In a possible implementation, when a response message sent by the network device for the first message is not received within first preset duration, the processing unit 110 may further be configured to determine that the first-type random access fails; or when a contention resolution message sent by the network device for the first message is not received within second preset duration, the processing unit 110 may further be configured to determine that the first-type random access fails.

In a possible implementation, the first condition may include but is not limited to: a reference signal received power RSRP included in a synchronization signal block SSB corresponding to the target-type random access resources is greater than a first preset threshold; reference signal received quality RSRQ included in an SSB corresponding to the target-type random access resources is greater than a second preset threshold; quality of a physical downlink control channel PDCCH included in an SSB corresponding to the target-type random access resources is greater than a third preset threshold; a first timer expires, where the first timer is a timer started for the target-type random access resources when the first-type random access is initiated or a timer started for the target-type random access resources after the first message is sent; or the target-type random access resources arrive earlier.

In a possible implementation, the first-type random access is a four-step random access process, and the second-type random access is a two-step random access process; or the first-type random access is a two-step random access process, and the second-type random access is a four-step random access process.

In a possible implementation, the first message includes a random access signal; or the first message includes a random access signal and information used for contention resolution.

When the random access apparatus 100 is applied to the terminal, the random access apparatus 200 is applied to the network device, and the method shown in FIG. 11 is performed, the following operations may further be performed.

In a possible implementation, when the first-type random access fails, if a random-access-resource selection condition is satisfied within the first backoff duration, the processing unit 110 may further be configured to select, within the first backoff duration, a random access resource to initiate random access, and does not perform backoff based on the second backoff duration.

In a possible implementation, when the first-type random access fails, if the random-access-resource selection condition is not satisfied within both the first backoff duration and the second backoff duration, the processing unit 110 may further be configured to select a random access resource from the first-type random access resources or the second-type random access resources, to initiate random access.

In a possible implementation, the processing unit 110 may further be configured to select, from random access resources whose priority is higher in the first-type random access resources and the second-type random access resources, a resource used to initiate random access. A priority of the first-type random access resources and a priority of the second-type random access resources may be preset, or may be configured by the network device. Alternatively, a type of random access resources whose priority is higher or lower may be indicated by the network device.

In a possible implementation, the first backoff indicator and the second backoff indicator may be located in a same MAC PDU. Certainly, the first backoff indicator and the second backoff indicator may alternatively be located in different MAC PDUs.

In a possible implementation, the MAC PDU further includes first indication information and second indication information. The first indication information is used to indicate a random access manner or random-access-resource type corresponding to the first backoff indicator, and the second indication information is used to indicate a random access manner or random-access-resource type corresponding to the second backoff indicator.

In a possible implementation, the first backoff indicator and the second backoff indicator are located in different subPDUs (subPDUs) of a MAC PDU. Based on this design, the processing unit 110 may further be configured to determine, based on a sequence of arrival time points of the subPDUs in which the first backoff indicator and the second backoff indicator are separately located, the random access manner or random-access-resource type corresponding to the first backoff indicator and the random access manner or random-access-resource type corresponding to the second backoff indicator.

It should be understood that division into units in the foregoing apparatuses is merely logical function division. During actual implementation, all or some of the units may be integrated into one physical entity, or may be physically separate. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. Alternatively, each unit may be stored in a memory in a form of a program to be invoked by a processing element of the apparatus to perform a function of the unit. In addition, some or all of the units may be integrated together, or the units may be implemented independently. The processing element herein may also be referred to as a processor, and may be an integrated circuit having a signal processing capability. In an implementation process, the steps in the foregoing methods or the foregoing units may be implemented by using a hardware integrated logic circuit in the processing element, or may be implemented in a form of software invoked by the processing element.

In an example, a unit in any one of the foregoing apparatuses may be one or more integrated circuits configured to implement the foregoing methods, for example, one or more specific-integrated circuits (application-specific integrated circuits, ASICs), one or more microprocessors (digital signal processors, DSPs), one or more field programmable gate arrays (field programmable gate arrays, FPGAs), or a combination of at least two of the integrated circuits. For another example, when the unit in the apparatus is implemented by scheduling a program by a processing element, the processing element may be a general-purpose processor, for example, a central processing unit (central processing unit, CPU) or another processor that can invoke the program. For another example, the units may be integrated and implemented in a form of a system-on-a-chip (system-on-a-chip, SOC).

The foregoing receiving unit is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing sending unit is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

The terminal exchanges information with the terminal by using an interface protocol between the terminal and the network device, for example, sends the first message. The terminal is wirelessly connected to the network device, and the terminal exchanges information with the network device through a wireless interface, for example, sends the first message.

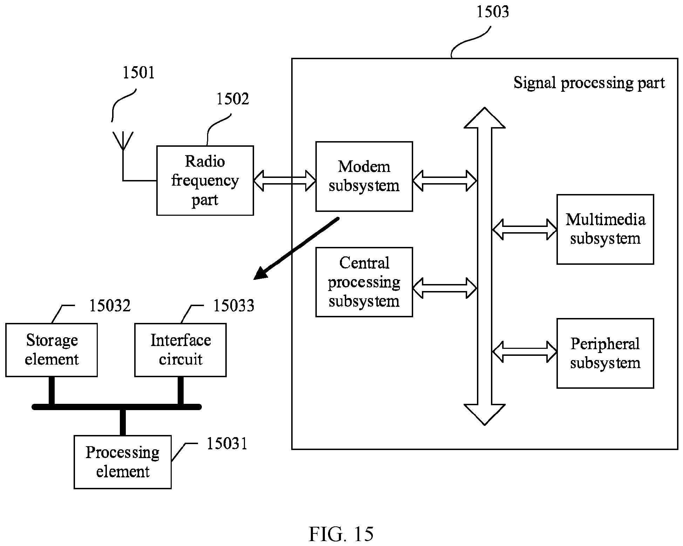

FIG. 15 is a schematic diagram of a structure of a terminal according to an embodiment of this application. The terminal may be the terminal in the foregoing embodiments and is configured to implement operations of the terminal in the foregoing embodiments. As shown in FIG. 15, the terminal includes an antenna 1501, a radio frequency part 1502, and a signal processing part 1503. The antenna 1501 is connected to the radio frequency part 1502. In a downlink direction, the radio frequency part 1502 receives, by using the antenna 1501, information sent by a network device; and sends, to the signal processing part 1503 for processing, the information sent by the network device. In an uplink direction, the signal processing part 1503 processes information about the terminal device, and sends the information to the radio frequency part 1502. The radio frequency part 1502 processes the information about the terminal device, and then sends the processed information to the network device through the antenna 1501.

The signal processing part 1503 may include a modem subsystem, configured to process each communication protocol layer of data. The signal processing part 1503 may further include a central processing subsystem, configured to process an operating system and an application layer of the terminal. In addition, the signal processing part 1503 may further include another subsystem, for example, a multimedia subsystem or a peripheral subsystem. The multimedia subsystem is configured to control a camera, a screen display, and the like of the terminal. The peripheral subsystem is configured to implement a connection to another device. The modem subsystem may be an independently disposed chip. Optionally, the foregoing apparatus used for the terminal may be located in the modem subsystem.

The modem subsystem may include one or more processing elements 15031, for example, a main control CPU and another integrated circuit. In addition, the modem subsystem may further include a storage element 15032 and an interface circuit 15033. The storage element 15032 is configured to store data and a program. However, a program used to perform the methods performed by the terminal in the foregoing methods may not be stored in the storage element 15032, but is stored in a memory outside the modem subsystem, and is loaded and used by the modem subsystem when to be used. The interface circuit 15033 is configured to communicate with another subsystem. The foregoing apparatus used for the terminal may be located in the modem subsystem. The modem subsystem may be implemented by using a chip. The chip includes at least one processing element and interface circuit. The processing element is configured to perform the steps of any method performed by the terminal. The interface circuit is configured to communicate with another apparatus. In an implementation, units of the terminal that implement the steps in the foregoing methods may be implemented by a processing element scheduling a program. For example, an apparatus applied to the terminal includes a processing element and a storage element. The processing element invokes a program stored in the storage element, to perform the methods performed by the terminal in the foregoing method embodiments. The processing element invokes a program stored in the storage element, to perform the method performed by the terminal device in the foregoing method embodiment. The storage element may be a storage element that is on the same chip as the processing unit, that is, an on-chip storage element.

In another implementation, the program used to perform the methods performed by the terminal in the foregoing methods may be in a storage element located on a different chip from the processing element, that is, an off-chip storage element. In this case, the processing element invokes or loads the program from the off-chip storage element to an on-chip storage element, to invoke and perform the method performed by the terminal in the foregoing method embodiment.

In still another implementation, units that implement the steps in the foregoing methods and that are in the apparatus applied to the terminal may be configured as one or more processing elements. These processing elements are disposed in the modem subsystem. The processing element herein may be an integrated circuit, for example, one or more ASICs, one or more DSPs, one or more FPGAs, or a combination of these types of integrated circuits. These integrated circuits may be integrated together to form a chip.

The units in the terminal for implementing the steps in the foregoing method may be integrated together in a form of a system-on-a-chip (system-on-a-chip, SOC). For example, the SOC chip is configured to implement the foregoing method. The at least one processing element and the storage element may be integrated into the chip, and the processing element invokes the program stored in the storage element to implement the foregoing method performed by the terminal. Alternatively, at least one integrated circuit may be integrated into the chip and configured to implement the foregoing method performed by the terminal. Alternatively, with reference to the foregoing implementation, functions of some units are implemented in a form of a program invoked by the processing element, and functions of some units are implemented in a form of an integrated circuit.

It can be learned that the foregoing apparatus applied to the terminal may include at least one processing element and an interface circuit. The at least one processing element is configured to perform any method performed by the terminal provided in the foregoing method embodiments. The processing element may perform some or all steps performed by the terminal, in a first manner, to be specific, by invoking the program stored in the storage element; or may perform some or all steps performed by the terminal, in a second manner, to be specific, by using a hardware integrated logic circuit in the processor element in combination with instructions; or may certainly perform, by combining the first manner and the second manner, some or all steps performed by the terminal.

As described above, the processing element herein may be a general purpose processor, for example, a CPU, or may be one or more integrated circuits configured to implement the foregoing method, for example, one or more ASICs, one or more microprocessors DSPs, one or more FPGAs, or a combination of at least two of these forms of integrated circuits.

The storage element may be a memory, or may be a general term of a plurality of storage elements.

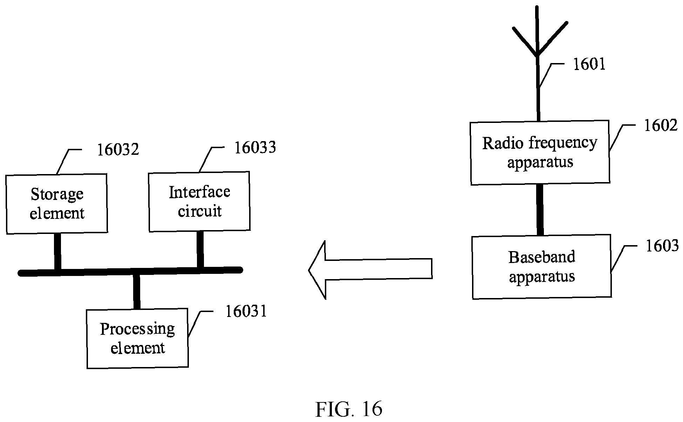

FIG. 16 is a schematic diagram of a structure of a network device according to an embodiment of this application. The network device is configured to implement the operations of the network device in the foregoing embodiments. As shown in FIG. 16, the base station includes an antenna 1601, a radio frequency apparatus 1602, and a baseband apparatus 1603. The antenna 1601 is connected to the radio frequency apparatus 1602. In an uplink direction, the radio frequency apparatus 1602 receives, by using the antenna 1601, information sent by a terminal, and sends, to the baseband apparatus 1603 for processing, the information sent by the terminal. In a downlink direction, the baseband apparatus 1603 processes the information about the terminal, and sends the information to the radio frequency apparatus 1602. The radio frequency apparatus 1602 processes the information about the terminal, and then sends the processed information to the terminal through the antenna 1601.

The baseband apparatus 1603 may include one or more processing elements 16031, for example, include a main control CPU and another integrated circuit. In addition, the baseband apparatus 1603 may further include a storage element 16032 and an interface 16033. The storage element 16032 is configured to store a program and data. The interface 16033 is configured to exchange information with the radio frequency apparatus 1602. The interface is, for example, a common public radio interface (common public radio interface, CPRI). The foregoing apparatus applied to the network device may be located in the baseband apparatus 1603. For example, the foregoing apparatus applied to the network device may be a chip in the baseband apparatus 1603. The chip includes at least one processing element and an interface circuit. The processing element is configured to perform steps in any foregoing method performed by the network device. The interface circuit is configured to communicate with another apparatus. In an implementation, units of the network device that implement the steps in the foregoing methods may be implemented by a processing element scheduling a program. For example, the apparatus applied to the network device includes a processing element and a storage element. The processing element invokes a program stored in the storage element, to perform the methods performed by the network device in the foregoing method embodiments. The storage element may be a storage element on the same chip as the processing element, that is, an on-chip storage element; or may be a storage element that is on a different chip from the processing element, that is, an off-chip storage element.

In another implementation, units that implement the steps in the foregoing methods and that are in the apparatus applied to the network device may be configured as one or more processing elements. These processing elements are disposed in the baseband apparatus. The processing element herein may be an integrated circuit, for example, one or more ASICs, one or more DSPs, one or more FPGAs, or a combination of these types of integrated circuits. These integrated circuits may be integrated together to form a chip.

Units of the network device that implement the steps in the foregoing methods may be integrated together, and implemented in a form of a system-on-a-chip (system-on-a-chip, SOC). For example, the baseband apparatus includes the SOC chip, configured to implement the foregoing methods. The at least one processing element and the storage element may be integrated into the chip, and the processing element invokes the program stored in the storage element to implement the foregoing method performed by the network device. Alternatively, at least one integrated circuit may be integrated into the chip, and configured to implement the foregoing method performed by the network device. Alternatively, with reference to the foregoing implementation, functions of some units are implemented in a form of a program invoked by the processing element, and functions of some units are implemented in a form of an integrated circuit.

It can be learned that the foregoing apparatus applied to the network device may include at least one processing element and an interface circuit. The at least one processing element is configured to perform any method performed by the network device provided in the foregoing method embodiments. The processing element may perform, in a first manner, that is, in a manner of executing a program stored in the storage element, some or all of the steps performed by the network device; or may perform, in a second manner, that is, in a manner of combining an integrated logical circuit of hardware in the processing element with an instruction, some or all of the steps performed by the network device; or may certainly perform, by combining the first manner and the second manner, some or all of the steps performed by the network device.

As described above, the processing element herein may be a general purpose processor, for example, a CPU, or may be one or more integrated circuits configured to implement the foregoing method, for example, one or more ASICs, one or more microprocessors DSPs, one or more FPGAs, or a combination of at least two of these forms of integrated circuits.

The storage element may be a memory, or may be a general term of a plurality of storage elements.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Obviously, a person skilled in the art can make various modifications and variations to this application without departing from the spirit and scope of this application. This application is intended to cover these modifications and variations of this application provided that they fall within the scope of the following claims of this application and their equivalent technologies.

## Claims

1. A random access method, comprising:
obtaining, by a terminal, first-type random access resources and second-type random access resources, wherein the first-type random access resources are used for first-type random access, and the second-type random access resources are used for second-type random access;
sending, by the terminal, a first message to a network device by using a resource in the first-type random access resources, wherein the first message is used to initiate the first-type random access;
receiving, by the terminal, a backoff indicator from the network device, wherein the backoff indicator is used to indicate a time value, and the time value is used to determine a backoff time range; and
performing, by the terminal, random-access-resource selection in target-type random access resources within backoff duration when the first-type random access fails, wherein the backoff duration is duration selected from the backoff time range, and the target-type random access resources comprise the first-type random access resources or the second-type random access resources.

2. The method according to claim 1, wherein the method further comprises:
receiving, by the terminal, a first indication from the network device, wherein the first indication is used to indicate a random-access-resource type associated with the backoff indicator; or
determining, by the terminal based on a random-access-resource type corresponding to the first message, a random-access-resource type associated with the backoff indicator.

3. The method according to claim 2, wherein the method further comprises:
when the random-access-resource type associated with the backoff indicator is a random-access-resource type associated with the first-type random access resources, the target-type random access resources are the second-type random access resources; or
when the random-access-resource type associated with the backoff indicator is a random-access-resource type associated with the second-type random access resources, the target-type random access resources are the first-type random access resources.

4. The method according to claim 2 or 3, wherein the method further comprises:
performing, by the terminal after the backoff duration, random-access-resource selection in random access resources of the random-access-resource type associated with the backoff indicator.

5. The method according to claim 1, wherein the target-type random access resources are the second-type random access resources.

6. The method according to any one of claims 1 to 5, wherein the performing, by the terminal, random-access-resource selection in target-type random access resources within backoff duration when the first-type random access fails comprises:
when a first condition is satisfied within the backoff duration, performing, by the terminal, random-access-resource selection in the target-type random access resources within the backoff duration.

7. The method according to any one of claims 1 to 5, wherein the method further comprises:
when a first condition is not satisfied within the backoff duration, performing, by the terminal, random-access-resource selection in the first-type random access resources or the second-type random access resources after the backoff duration.

8. The method according to claim 6 or 7, wherein the first condition comprises:
a reference signal received power RSRP comprised in a synchronization signal block SSB corresponding to the target-type random access resources is greater than or equal to a first preset threshold;
reference signal received quality RSRQ comprised in an SSB corresponding to the target-type random access resources is greater than or equal to a second preset threshold;
quality of a physical downlink control channel PDCCH comprised in an SSB corresponding to the target-type random access resources is greater than or equal to a third preset threshold;
a first timer expires, wherein the first timer is a timer started for the target-type random access resources when the first-type random access is initiated or a timer started for the target-type random access resources after the first message is sent; or
the target-type random access resources arrive earlier.

9. The method according to any one of claims 1 to 8, wherein the method further comprises:
initiating, by the terminal, random access by using a selected random access resource.

10. The method according to any one of claims 1 to 9, wherein the method further comprises:
when the terminal does not receive, within first preset duration, a response message sent by the network device for the first message, determining, by the terminal, that the first-type random access fails; or
when the terminal does not receive, within second preset duration, a contention resolution message sent by the network device for the first message, determining, by the terminal, that the first-type random access fails.

11. The method according to any one of claims 1 to 10, wherein the first-type random access is a four-step random access process, and the second-type random access is a two-step random access process; or the first-type random access is a two-step random access process, and the second-type random access is a four-step random access process.

12. The method according to any one of claims 1 to 11, wherein the first message comprises a random access signal; or the first message comprises a random access signal and information used for contention resolution.

13. A random access method, comprising:
receiving, by a network device, a first message sent by a terminal by using a resource in first-type random access resources, wherein the first-type random access resources are used for first-type random access, and the first message is used to initiate the first-type random access; and
sending, by the network device, a backoff indicator to the terminal, wherein the backoff indicator is used to indicate a time value, and the time value is used to determine a backoff time range.

14. The method according to claim 13, wherein the method further comprises:
sending, by the network device, a first indication to the terminal, wherein the first indication is used to indicate a random-access-resource type associated with the backoff indicator; or
a random-access-resource type corresponding to the first message is used to determine a random-access-resource type associated with the backoff indicator.

15. The method according to claim 14, wherein the method further comprises:
when the random-access-resource type associated with the backoff indicator is a random-access-resource type associated with the first-type random access resources, target-type random access resources are second-type random access resources; or
when the random-access-resource type associated with the backoff indicator is a random-access-resource type associated with second-type random access resources, target-type random access resources are the first-type random access resources, wherein
the second-type random access resources are used for second-type random access, and the target-type random access resources are used by the terminal to perform random-access-resource selection.

16. The method according to claim 15, wherein the first-type random access is a four-step random access process, and the second-type random access is a two-step random access process; or the first-type random access is a two-step random access process, and the second-type random access is a four-step random access process.

17. The method according to any one of claims 13 to 16, wherein the first message comprises a random access signal; or the first message comprises a random access signal and information used for contention resolution.

18. A random access apparatus, used in a terminal, wherein the random access apparatus comprises a unit or means configured to perform steps in the method according to any one of claims 1 to 12.

19. A random access apparatus, used in a network device, wherein the random access apparatus comprises a unit or means configured to perform steps in the method according to any one of claims 13 to 17.

20. A random access apparatus, comprising at least one processor and an interface circuit, wherein the at least one processor is configured to communicate with another apparatus through the interface circuit, and perform the method according to any one of claims 1 to 12.

21. A random access apparatus, comprising at least one processor and an interface circuit, wherein the at least one processor is configured to communicate with another apparatus through the interface circuit, and perform the method according to any one of claims 13 to 17.

22. A random access apparatus, comprising a processor, wherein the processor is configured to invoke a program stored in a memory, to perform the method according to any one of claims 1 to 12.

23. A random access apparatus, comprising a processor, wherein the processor is configured to invoke a program stored in a memory, to perform the method according to any one of claims 13 to 17.

24. A terminal, comprising the apparatus according to claim 18, 20, or 22.

25. A computer-readable storage medium, comprising a program, wherein when the program is run by a processor, the method according to any one of claims 1 to 17 is performed.

26. A communication system, comprising the random access apparatus according to any one of claim 18, 20, or 22 and the random access apparatus according to any one of claim 19, 21, or 23.

27. A computer program product comprising instructions, wherein when the computer program product is run on a computer, the computer is enabled to perform the method according to any one of claims 1 to 17.

28. A chip, comprising a processor, wherein the processor is configured to invoke a computer program from a memory and run the computer program, to perform the method according to any one of claims 1 to 17.
